# EUROPEAN PATENT APPLICATION

(11) **EP 1 414 126 A1**
(43) Date of publication of application: **28.04.2004**
(21) Application number: 02746127.6
(22) Date of filing: 19.07.2002
(51) Int. Cl.: H02J 3/32, H02J 7/34

(54) **METHOD FOR OPERATING POWER SOURCE SYSTEM AND POWER SOURCE SYSTEM COMPRISING SECONDARY BATTERY**

(30) Priority: 03.08.2001 JP 2001237056
(71) Applicant: Sumitomo Electric Industries, Ltd., Osaka-shi, Osaka 541-0041 (JP)
(72) Inventor: EMURA, K, c/o Osaka Works Sumitomo Elec Indus Ltd, Osaka-shi, Osaka 554-0024 (JP)
(74) Representative: Cross, Rupert Edward Blount
(86) International application number: PCT/JP2002/007368
(87) International publication number: WO 2003/015236

(57) **Abstract**

A method of operating a power supply system, and a power supply system, that serve to achieve efficient operation of power generating units and reduce operating time, are provided.

In a method of operating a power supply system in which a secondary battery is connected between a power generating unit and a load, the power generating unit is operated at a constant output. The power generating unit is implemented, for example, by a diesel generator. The efficiency of operation is improved particularly by continuous operation of the power generating unit at the rated capacity thereof. Furthermore, the secondary battery is charged when surplus power is generated by the operation of the power generating unit, and the redox flow battery is discharged when power is deficient, so power is supplied in accordance with demand.

## Description

### Technical Field

The present invention relates to methods of operating power supply systems, and to power supply systems including secondary batteries. Particularly, the present invention relates to a method of operating a power supply system, by which power generating units are efficiently operated and accumulated operating time is reduced.

### Background Art

A stand-alone power supply system is used as electric power supply means in an isolated island or the like. In the stand-alone power supply system, power generating units such as diesel generators are connected to loads in the island so that electric power will be supplied as required.

In such a system, power has conventionally been supplied, for example, by combining a plurality of power generating units. More specifically, each of the power generating units is operated at an output that is larger than or equal to 50% of the rated capacity thereof whenever possible. Furthermore, if a plurality of power generating units are in operation, the power generating units are operated so that respective outputs thereof will be equal.

According to the conventional operating method, however, output of the respective power generating units vary, and operating efficiency is low. Generally, with regard to a combustion-type electric generator such as a diesel generator, maximum efficiency is achieved when it is operated at the rated capacity thereof.

Furthermore, other problems have also existed, such as a long accumulated operating time and a high maintenance frequency of each of the power generating units.

### Disclosure of Invention

Accordingly, it is a main object of the present invention to provide a method of operating a power supply system, by which power generating units are efficiently operated and accumulated operating time is reduced.

It is another object of the present invention to provide a power supply system including a secondary battery, with which efficient operation is achieved.

According to the present invention, a secondary battery is used as a power accumulating unit, and a power generating unit is operated at a constant output, whereby the above objects are achieved.

More specifically, an operating method according to the present invention is a method of operating a power supply system in which a secondary battery is connected between a power generating unit and a load, wherein the power generating unit is operated at a predetermined, constant output, and an excess or deficiency of the generated electric power relative to a load demand for electric power is adjusted by charging or discharging the secondary battery.

By continuously operating the power generating units at the constant output as described above, efficient operation is achieved. Maximum efficiency is particularly achieved when the power generating unit is operated continuously at the rated capacity thereof. Furthermore, the secondary battery is charged when the power generating unit generates surplus power while the secondary battery is discharged when power supplied solely by the operation of the power generating unit is insufficient, whereby power is supplied in accordance with the load.

It is particularly preferable to use a redox flow battery as the secondary battery. This is because a redox flow battery is minimally degraded even when it is repeatedly charged and discharged. Furthermore, since a redox flow battery uses a common electrolytic solution between battery cells, an imbalance of charging status between the cells (or between cell stacks) does not occur even when the redox flow battery is repeatedly charged and discharged. Thus, charging, etc., for adjusting the imbalance of charging status is not required, and the power supply system is operated more efficiently.

Furthermore, a redox flow battery allows a larger depth of charging and discharging compared with other types of secondary battery. More specifically, repeated charging and discharging is allowed between 0% and 100% of the rated capacity of the redox flow batteries. Thus, the rated capacity of the redox flow battery may be larger than or equal to one half of the rated capacity of the power generating unit. By combining the operation of the power generating unit and the charging and discharging of the redox flow battery having the above- described output, a system can be implemented such that the supply of electric power corresponds to the demand for electric power. For example, with a different type of secondary battery which is limited to use at 50% to 100% of the rated capacity thereof, cost-efficiency is lower since the battery is required to have the same rated capacity as the rated capacity of the power generating unit. Also advantageously, power is supplied simply by discharging of the redox flow battery when the demand for electric power is small. This serves to reduce accumulated operating time of the power generating unit.

The power generating unit may be implemented by various known types of electric generators, such as a diesel generator or a gas turbine generator. Combustion-type electric generators such as these generators, in which electric power is generated by the combustion of fuel, generally achieve maximum efficiency by constant operation at the rated capacity.

Furthermore, a plurality of power generating units are preferably provided so that the number of units to be operated is selected in accordance with the demand for electric power. For example, only a certain number of power generating units is operated when the demand for electric power is small while all the power generating units are operated when the demand for electric power is large, whereby efficient operation is achieved. Accordingly, the accumulated operating time of each of the power generating units is reduced and the maintenance cycle is extended.

A power supply system according to the present invention is operated by the method described above. That is, the system includes a power generating unit, a load, and a secondary battery for adjusting an excess or deficiency of power supplied by the power generating unit relative to the load's demand for electric power, the secondary battery being connected between the power generating unit and the load and being operated at a constant output.

### Brief Description of the Drawings

Figure 1 is a schematic diagram of a power supply system for which a method according to the present invention is used.
Figure 2 is a schematic diagram of a redox flow battery.
Figure 3 is a graph showing electric power generated by electric generators and the status of charging and discharging of the redox flow battery after the introduction of the redox flow battery, according to the method of the present invention.
Figure 4 is a graph showing a model of the operational pattern of the electric generators and status of charging and discharging of the redox flow battery according to the method of the present invention after the introduction of the redox flow battery.
Figure 5 is a graph showing a pattern of power consumption in summer, and electric power generated by each of the electric generators and a pattern of charging and discharging of the redox flow battery according to the method of the present invention after the introduction of the redox flow battery.
Figure 6 is a graph showing a pattern of power consumption in spring and fall, and electric power generated by each of the electric generators and a pattern of charging and discharging of the redox flow battery according to the method of the present invention after the introduction of the redox flow battery.
Figure 7 is a graph showing a pattern of power consumption in winter, and electric power generated by each of the electric generators and a pattern of charging and discharging of the redox flow battery according to the method of the present invention after the introduction of the redox flow battery.
Figure 8 is a graph showing electric power generated by electric generators according to a conventional method before the introduction of the redox flow battery.
Figure 9 is a graph showing a model of the operational pattern of the electric generators according to the conventional method before the introduction of the redox flow battery.
Figure 10 is a graph showing a pattern of power consumption in summer, and electric power generated by each of the electric generators and a pattern of charging and discharging of the redox flow battery according to the conventional method.
Figure 11 is a graph showing a pattern of power consumption in spring and fall, and electric power generated by each of the electric generators and a pattern of charging and discharging of the redox flow battery according to the conventional method.
Figure 12 is a graph showing a pattern of power consumption in winter, and electric power generated by each of the electric generators and a pattern of charging and discharging of the redox flow battery according to the conventional method.

### Best Mode for Carrying Out the Invention

An embodiment of the present invention is described below. The same components are denoted by the same reference numerals in the drawings, and redundant descriptions thereof are omitted. The scales in the drawings are not necessarily equal to those in the description.

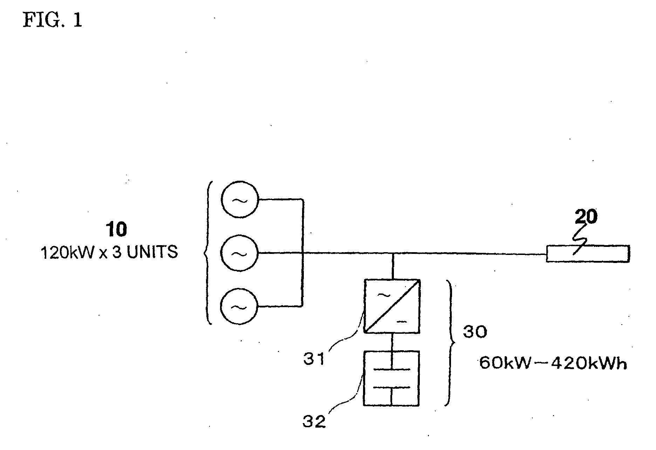

Figure 1 shows a power supply system in which an operating method according to the present invention is used.

In the system, three power generating units 10 are connected to loads 20 on an island, and a redox flow (RF) battery 30 is connected therebetween. The RF battery 30 includes a power conversion system (inverter) 31 and a main battery unit 32.

In this embodiment, diesel generators (DG) are used as the power generating units 10.

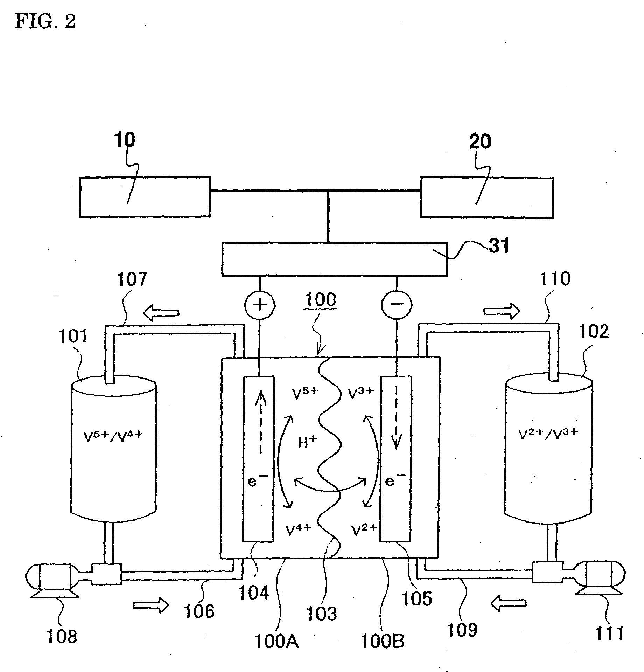

The principles of operation of the RF battery 30 will be described with reference to Fig. 2. The battery includes a cell 100 that is separated into a cathode cell 100A and an anode cell 100B by a separating membrane 103 that allows ions to pass therethrough. The cathode cell 100A and the anode cell 100B include a cathode 104 and an anode 105, respectively. The cathode cell 100A is connected, via pipes 106 and 107, to a cathode tank 101 for supplying and discharging a cathode electrolytic solution. Similarly, the anode cell 100B is connected, via pipes 109 and 110, to an anode tank 102 for supplying and discharging an anode electrolytic solution. Aqueous solutions of ions whose valence changes, such as vanadium ions, are used as the electrolytic solutions. The electrolytic solutions are circulated by pumps 108 and 111, and charging and discharging occur in accordance with valence modification reactions of the ions at the cathode 104 and the anode 105. When electrolytic solutions containing vanadium ions are used, reactions that occur in the cell during charging and discharging are as follows:
- Cathode:: V⁴⁺ → V⁵⁺ + e⁻ (charging)
V⁴⁺ ← V⁵⁺ + e⁻ (discharging)
- Anode:: V³⁺ + e⁻ → V²⁺ (charging)
V³⁺ + e⁻ ← V²⁺ (discharging)

Usually, a structure called "cell stack", in which a plurality of cells are stacked, is used.

In the system described above, each of the power generating units is continuously operated at a constant output, while the redox flow battery is charged when the demand for electric power is small, and a plurality of power generating units are operated simultaneously or the redox flow battery is discharged when the demand for electric power is large. Furthermore, the number of operating units among the power generating units is chosen in accordance with the demand for electric power.

### (Example of estimation)

The operation of a power supply system by an operating method according to the present invention and by a conventional operating method were simulated to calculate and compare accumulated operating times, fuel consumptions, and accumulated electric power generations of diesel generators (total of three units). The following conditions were assumed in the simulation:

### (Diesel generators)

Rated capacity: 120 kW
Number of units: 3
Fuel consumption rate at rated capacity (A): 0.26 L/kWh
Fuel consumption rate at 50% of rated capacity (B): 0.286 L/kWh (assumed to be 10% diminished compared with operation at rated capacity)
Fuel consumption rate between (A) and (B): Linear approximation
Unit price of fuel: 50 yen/L
Maintenance: Every 2,000 hours of operating time

### (Redox flow battery)

Rated capacity: 60 kW
Number of units: 1

### (Load curve)

- Summer: Maximum power consumption: 344 kW/h
Minimum power consumption: 63 kW/h
- Spring and fall: Maximum power consumption: 317 kW/h
Minimum power consumption: 63 kW/h
- Winter:: Maximum power consumption: 229 kW/h
Minimum power consumption: 63 kW/h

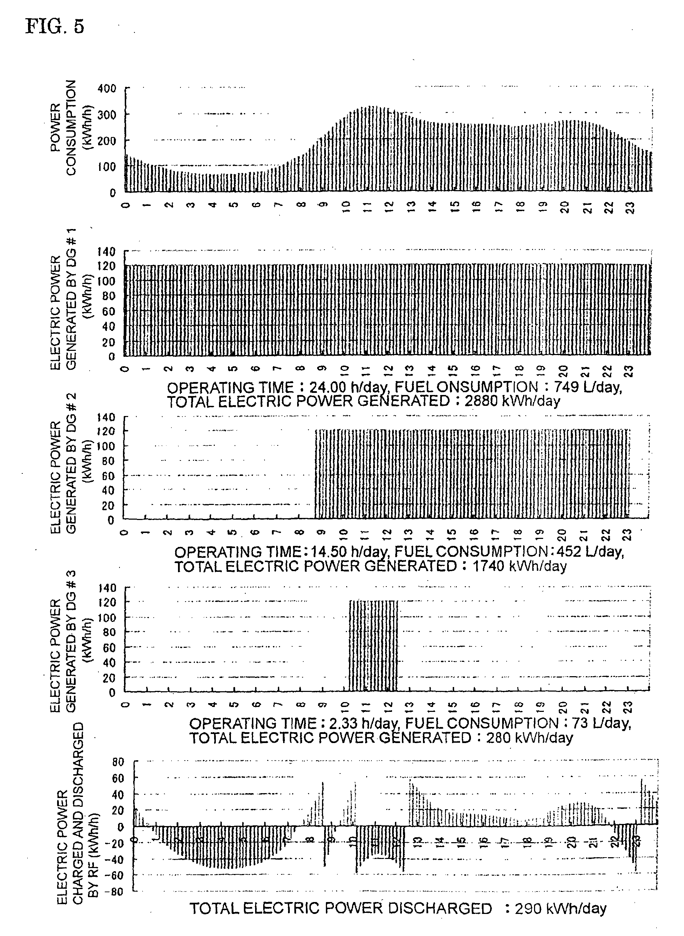

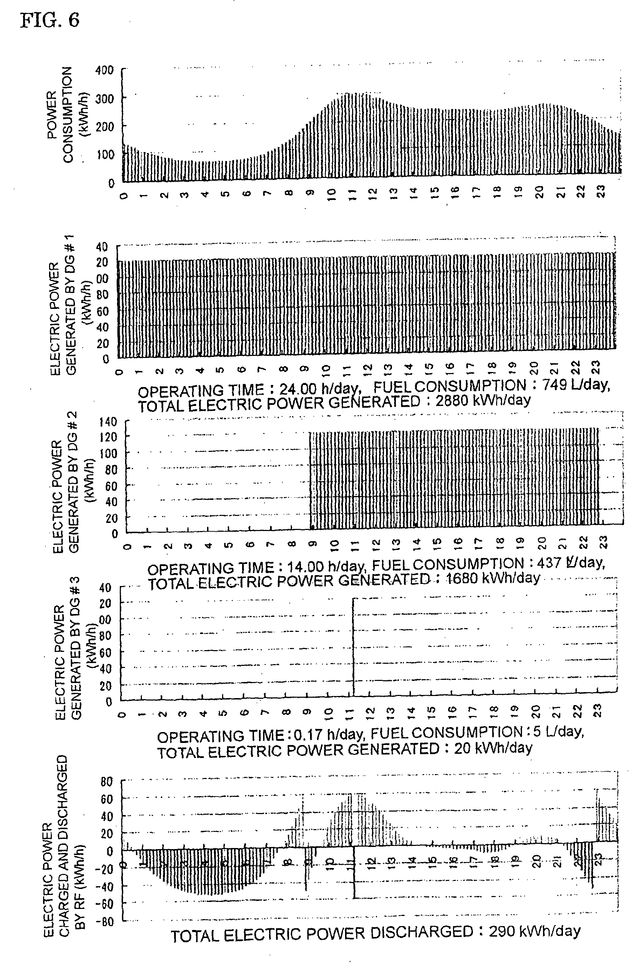

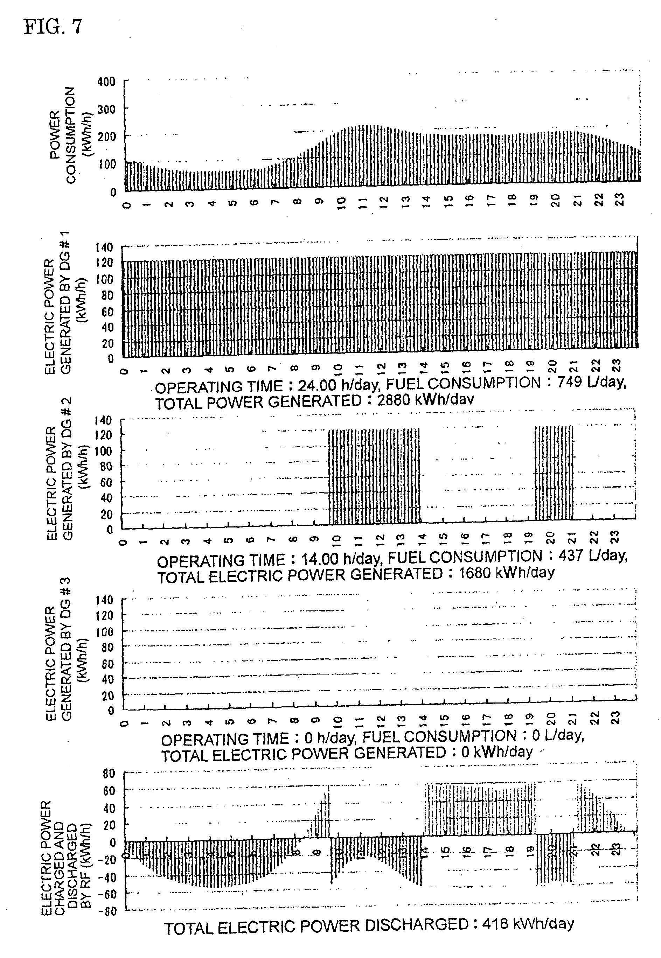

Specific patterns are shown in the uppermost graphs in Figs. 5 to 7.

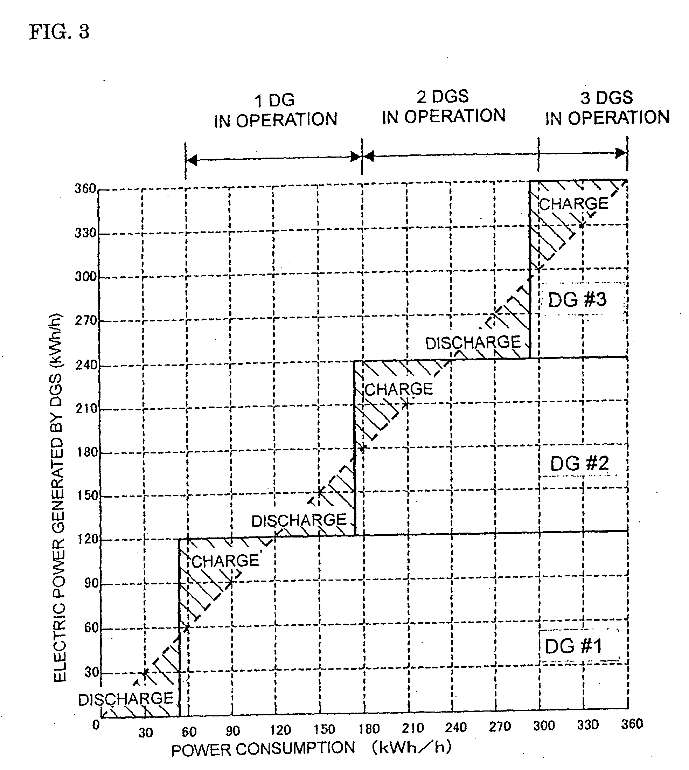

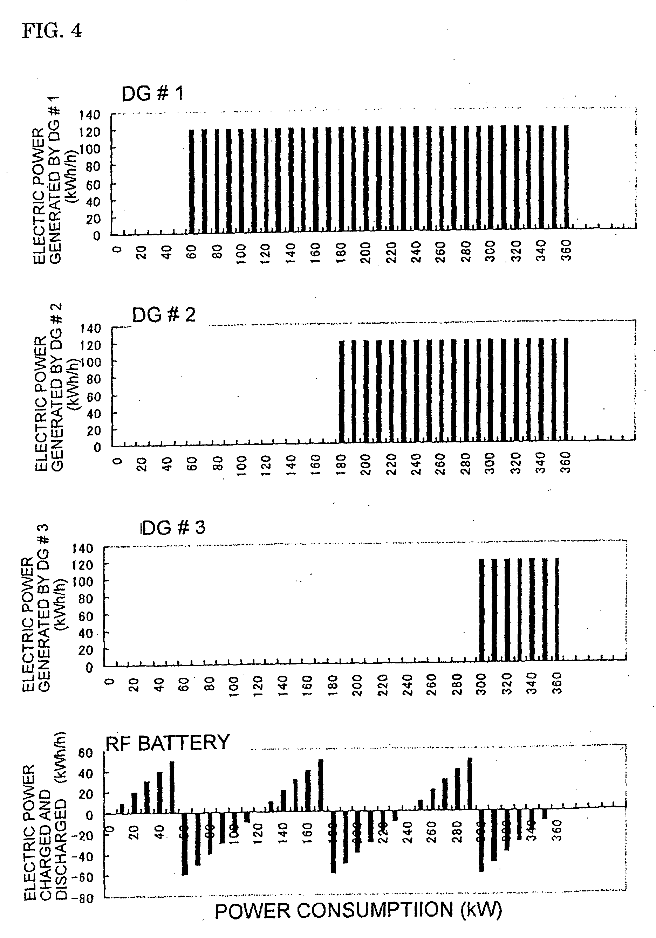

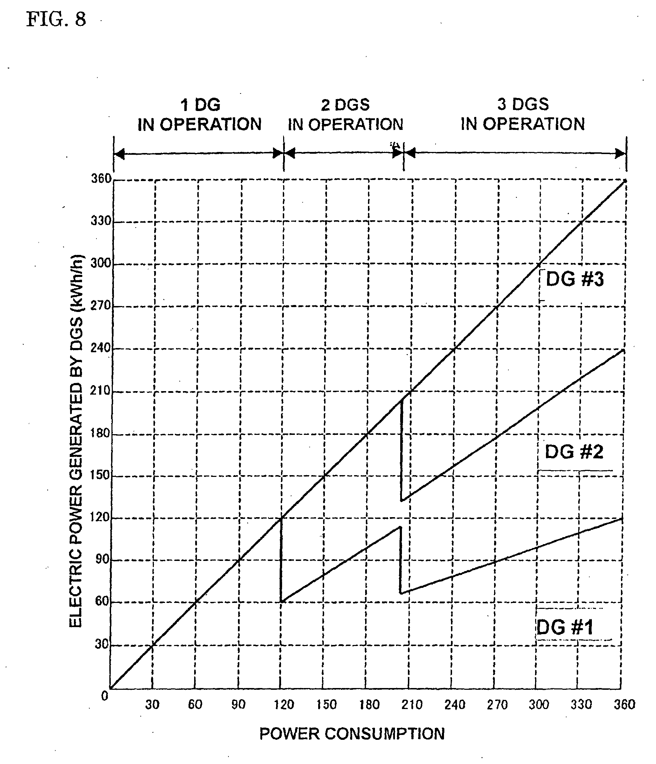

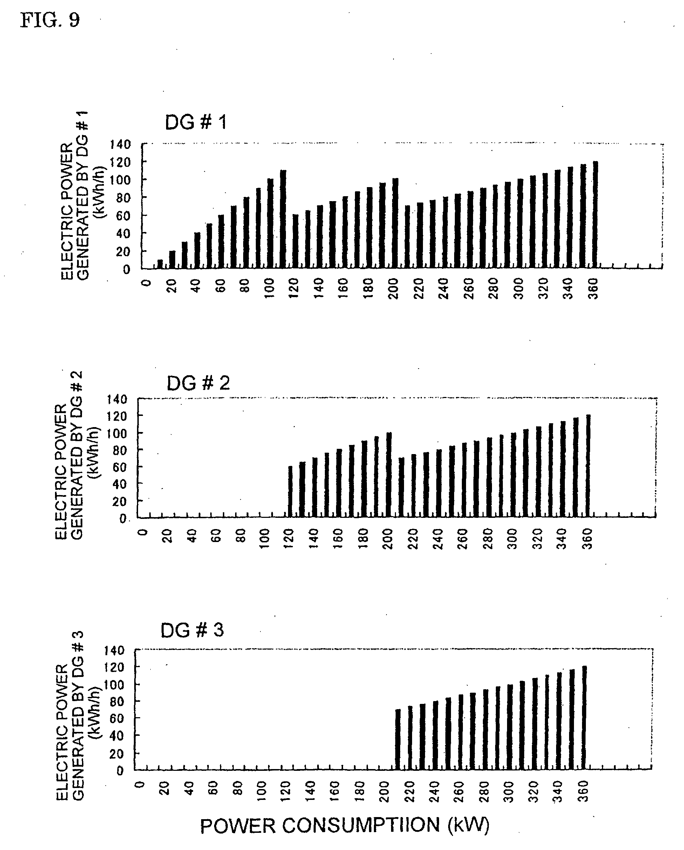

With these assumptions, the output of electric power generation by an operational pattern of the embodiment (after introduction of RF), shown in Figs. 3 and 4, and the output of electric power generation by an operational pattern of a comparative example (before introduction of RF), shown in Figs. 8 and 9, were simulated, for summer, spring and fall, and winter.

The operational pattern of the generators according to the example was such that each of the diesel generators was operated at the rated capacity thereof. The balance of demand and supply was adjusted by charging and discharging the redox flow battery so that the total output of the generators became as close as possible to 120 kW/h, 240 kW/h, or 360 kW/h.

The operational pattern of the generators in the comparative example was such that the generators were operated at outputs larger than or equal to the rated capacities thereof whenever possible, and if a plurality of generators were in operation, outputs of the respective generators were equalized.

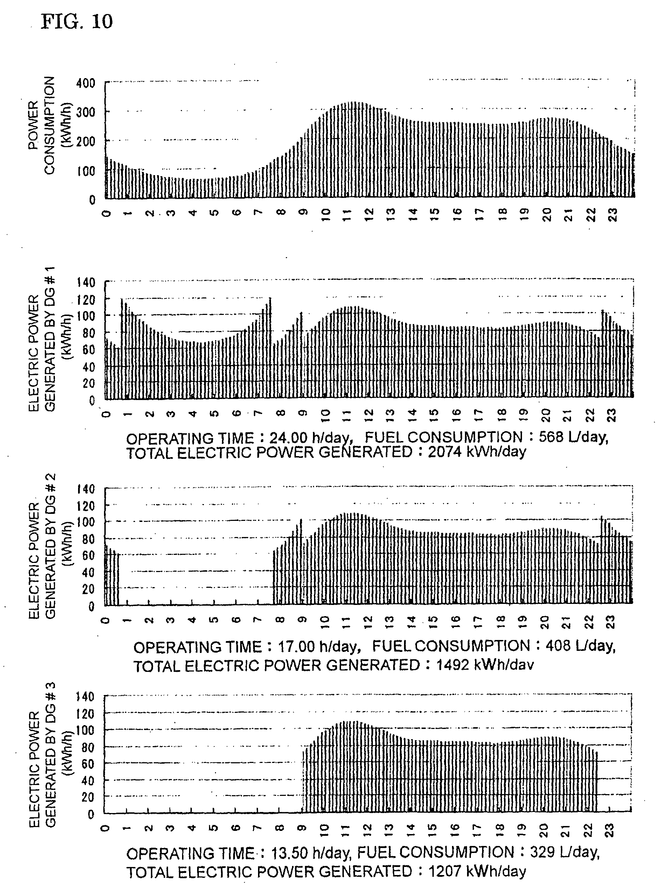

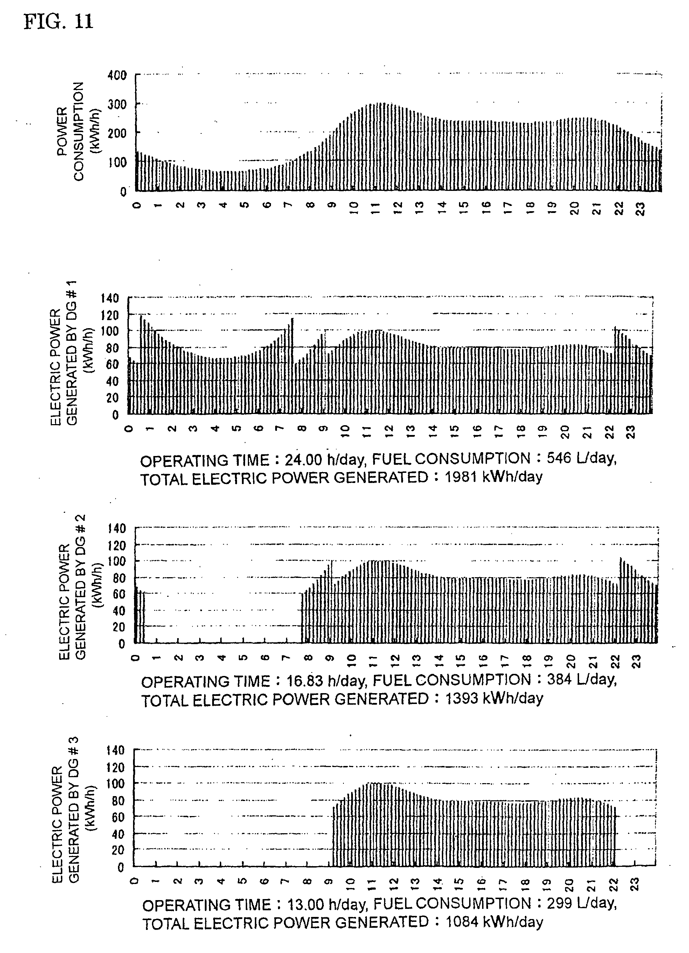

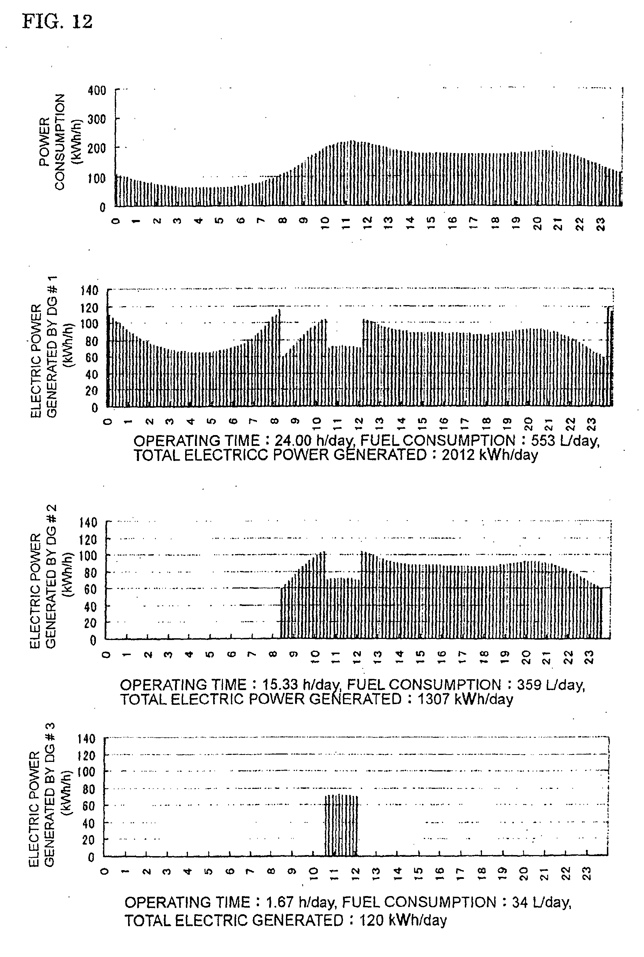

The results of the simulation are shown in Figs. 5 to 7 for the example and in Figs. 10 to 12 for the comparative example. Furthermore, the results are summarized in Table I for summer, in Table II for spring and fall, in Table III for winter, and in Table IV for the entire year. "Average operating rate of DG" in Table IV refers to "accumulated operating time of DG" divided by "72h × 365 days".

**Table I**

| | Before introduction of RF | After introduction of RF | Difference |
|---|---|---|---|
| Accumulated | | | |
| operating time of | 54.5 | 40.8 | -13.7 |
| DG (h/day) | | | |
| Fuel consumption | 1,305 | 1,274 | -31 |
| (liter/day) | | | |
| Accumulated | | | |
| electric power | 4,772 | 4,900 | 128 |
| generated by DG | | | |
| (kWh/day) | | | |
| Unit price of | | | |
| electric power | 13.67 | 13.00 | -0.67 |
| generated by DG | | | |
| (yen/kWh) | | | |

**Table II**

| | Before introduction of RF | After introduction of RF | Difference |
|---|---|---|---|
| Accumulated | | | |
| operating time of | 53.8 | 38.2 | -16 |
| DG (h/day) | | | |
| Fuel consumption | 1,229 | 1,191 | -38 |
| (liter/day) | | | |
| Accumulated | | | |
| electric power | 4,459 | 4,580 | 121 |
| generated by DG | | | |
| (kWh/day) | | | |
| Unit price of | | | |
| electric power | 13.78 | 13.00 | -0.78 |
| generated by DG | | | |
| (yen/kWh) | | | |

**Table III**

| | Before introduction of RF | After introduction of RF | Difference |
|---|---|---|---|
| Accumulated | | | |
| operating time of | 41.0 | 30.2 | -10.8 |
| DG (h/day) | | | |
| Fuel consumption | 945 | 941 | -4 |
| (liter/day) | | | |
| Accumulated | | | |
| electric power | 3,438 | 3,620 | 182 |
| generated by DG | | | |
| (kWh/day) | | | |
| Unit price of | | | |
| electric power | 13.75 | 13.00 | -0.75 |
| generated by DG | | | |
| (yen/kWh) | | | |

**Table IV**

| | Before introduction of RF | After introduction of RF | Difference |
|---|---|---|---|
| Accumulated | | | |
| operating time of | 18,538 | 13,445 | -5,094 |
| DG (h/year) | | | |
| Average operating | 71% | 51% | -19% |
| rate of DG (%) | | | |
| Maintenance | | | |
| frequency per | 9.3 | 6.7 | -2.5 |
| 2,000 hours | | | |
| (times/year) | | | |
| Fuel consumption | 429,588 | 419,458 | -10,130 |
| (liter/year) | | | |
| Accumulated | | | |
| electric power | 1,562,857 | 1,613,300 | 50,443 |
| generated by DG | | | |
| (kWh/year) | | | |
| Unit price of | | | |
| electric power | 13.74 | 13.00 | -0.74 |
| generated by DG | | | |
| (yen/kWh) | | | |

As is apparent particularly from the results shown in Table IV, the "accumulated operating time of DG", "maintenance frequency", and "fuel consumption" are considerably reduced after the introduction of RF. On the other hand, the accumulated electric power generated by DG is increased to an extent sufficient to allow charging of the redox flow battery. This indicates that energy will be used very efficiently. Furthermore, an abatement of CO₂ emission owing to the reduction in fuel consumption, and a reduction in SOx and NOx owing to improved combustion efficiency, are expected.

### Industrial Applicability

As described above, according to an operating method of the present invention, power-generating units can be operated at rated capacities thereof so that the energy efficiency of electric generators is improved.

Furthermore, power supply can be achieved in accordance with load in a manner such that the redox flow battery is charged when the power generating units generate surplus power while the redox flow battery is discharged when power supplied solely by the operation of the power generating units alone is insufficient. Accordingly, the accumulated operating time of the power generating units can be reduced, allowing cost reduction through reduced fuel consumption and lessened maintenance frequency, and extended lifetime of the units.

## Claims

1. A method of operating a power supply system in which a secondary battery is connected between a power generating unit and a load,
wherein the power generating unit is operated at a predetermined constant output, and an excess or deficiency of generated electric power relative to a load demand for electric power is adjusted by charging or discharging the secondary battery.

2. A method of operating a power supply system according to claim 1,
wherein the number of units to be operated is selected out of a plurality of power generating units in accordance with load demand for electric power, the selected power generating unit or units being operated at a predetermined constant output.

3. A method of operating a power supply system according to Claim 1, wherein the constant output of the power generating unit is a rated capacity of the power generating unit.

4. A method of operating a power supply system according to Claim 1, wherein the secondary battery is a redox flow battery.

5. A method of operating a power supply system according to Claim 2, wherein the secondary battery is a redox flow battery.

6. A method of operating a power supply system according to Claim 3, wherein the secondary battery is a redox flow battery.

7. A method of operating a power supply system according to Claim 4, wherein a rated capacity of the redox flow battery is larger than or equal to one half of a rated capacity of the power generating unit.

8. A method of operating a power supply system according to Claim 5, wherein a rated capacity of the redox flow battery is larger than or equal to one half of a rated capacity of the power generating unit.

9. A method of operating a power supply system according to Claim 6, wherein a rated capacity of the redox flow battery is larger than or equal to one half of the rated capacity of the power generating unit.

10. A power supply system comprising a secondary battery connected between a power generating unit and a load,
wherein the power generating unit is operated at a predetermined constant output, and an excess or deficiency of generated electric power relative to load demand for electric power is adjusted by charging or discharging the secondary battery.

11. Apower supply system according to Claim 10, wherein the constant output of the power generating unit is a rated capacity of the power generating unit.

12. A power supply system according to Claim 10, wherein the secondary battery is a redox flow battery.

13. A power supply system according to Claim 11, wherein the secondary battery is a redox flow battery.

14. A power supply system according to Claim 12, wherein a rated capacity of the redox flow battery is larger than or equal to one half of a rated capacity of the power generating unit.

15. A power supply system according to Claim 13, wherein a rated capacity of the redox flow battery is larger than or equal to one half of the rated capacity of the power generating unit.
